# EUROPEAN PATENT SPECIFICATION

(11) **EP 4 191 104 B1**
(45) Date of publication and mention of the grant of the patent: **09.12.2026**
(21) Application number: 20946541.8
(22) Date of filing: 31.07.2020
(51) Int. Cl.: F16J 15/10, F16K 5/08, F16L 19/025, F16L 23/18, F16K 5/06, F16K 27/06

(54) **INTERNAL-SEALING ONE-PIECE EXTERNAL THREAD BALL VALVE**
EINTEILIGES, INNEN ABDICHTENDES AUSSENGEWINDEKUGELVENTIL
VANNE À BILLE À FILETAGE EXTÉRIEUR MONOBLOC À ÉTANCHÉITÉ INTÉRIEURE

(43) Date of publication of application: 07.06.2023
(73) Proprietor: Yancheng Teyi Pipe Fitting Science&Technology Co., Ltd., Yancheng City, Jiangsu 224400 (CN)
(72) Inventor: YANG, Shunli, Yancheng, Jiangsu 224400 (CN); JIANG, Kun, Yancheng, Jiangsu 224400 (CN)
(74) Representative: Vitina, Maruta
(86) International application number: PCT/CN2020/106186
(87) International publication number: WO 2022/021319

(56) References cited:
- CN-A- 105 387 239
- CN-A- 107 461 510
- CN-A- 110 792 802
- CN-A- 110 792 802
- CN-U- 205 504 068
- CN-Y- 2 447 590
- CN-Y- 2 634 236
- CN-Y- 2 643 123
- CN-Y- 2 643 123
- US-B1- 6 361 084

## Description

### TECHNICAL FIELD

The present invention relates to the technical field of chemical machinery, and in particular to an internally-sealed one-piece external thread ball valve.

### BACKGROUND

The Chinese Patent CN 110792802 A provides a one-piece screw thread ball valve for chemical engineering and for use in movable connection, wherein an outer side of a valve seat gland of the ball valve is made into an inclined plane, an outer side of the left side (close to the ball core) of a valve body is also made into an inclined plane, with the two inclined planes having the same inclined angles, and the valve body, the ball core and the valve seat gland are assembled and then are processed together using a lathe. The sealing surface of the flange of the left loose joint is also made into an inclined plane, and the cross section of the sealing gasket is a trapezoidal shape with a thin outer part and a thick inner part. after loose joints are mounted on the valve, an inclined plane of the valve body at a joint of each loose joint plays a sealing role, an inclined plane of the valve seat gland plays a role of fixing the sealing gaskets, the sealing gaskets expand outwards under an action of internal pressure during use, and a sealing effect is better when the pressure is higher. However, this design also has the disadvantages that the sealing gaskets will be deformed when the pressure is very high, the manufacturing is complex and the requirement is high, namely, sealing inclined planes of the valve body and the valve seat gland are required to be processed only after the valve body and the valve seat gland are mounted, so that the materials are wasted, and the sealing gaskets are large in size, so that the manufacturing cost is high, and in addition, this design is not suitable for high pressure.

### SUMMARY

The present invention aims to provide an internally-sealed one-piece external thread ball valve to solve the problems proposed in the background section described above.

Provided is an internally-sealed one-piece external thread ball valve, comprising a valve seat gland, sealing gaskets, a valve, nuts and a valve body, wherein the sealing gaskets are arranged in the valve body, a contact part of the valve body and the valve seat gland is an internal thread, contact parts of the valve body and the sealing gaskets are smooth inner circular surfaces, the sealing gasket is an inverted trapezoidal ring, the sealing gaskets expand outwards under an action of pressure formed by tightening the nuts during valve assembly, and outer circular surfaces of the sealing gaskets and an inner circular surface of the valve body form sealing.

Furthermore, the internally-sealed one-piece external thread ball valve further comprises pipelines, connecting pipes and a ball core, wherein the valve is in movable connection with the pipelines, outer walls of two ends of the valve body are threads, loose joint parts connected with the two ends of the valve body comprise the sealing gaskets, the connecting pipes and the nuts, the sealing gasket is made of a non-rubber plastic material, a through hole is formed in the ball core, and a diameter of the through hole is equal to an inner diameter of the pipelines.

Furthermore, contact surfaces of the valve seat gland and the connecting pipes with the sealing gaskets between the valve seat gland and the connecting pipes are all external conical surfaces, and an included angle between a radial cross section of each of the valve seat gland and the connecting pipes and the corresponding external conical surface is 5-30°.

Furthermore, contact surfaces of the valve seat gland and the connecting pipes with the sealing gaskets between the valve seat gland and the connecting pipes are all external conical surfaces, and an included angle between a radial cross section of each of the valve seat gland and the connecting pipes and the corresponding external conical surface is 5-15°.

Furthermore, the sealing gasket is made of a plastic material, an inner hole of the sealing gasket is equal to the diameter of the through hole, front and back radial surfaces of the sealing gasket are both internal conical shapes, and an included angle between a radial cross section of the sealing gasket and each internal conical surface is 5-30°.

Furthermore, the sealing gasket is made of a plastic material, an inner hole of the sealing gasket is equal to the diameter of the through hole, front and back radial surfaces of the left sealing gasket are both internal conical shapes, and an included angle between a radial cross section of the sealing gasket and each internal conical surface is 5-15°.

Furthermore, the plastic material is any one of polytetrafluoroethylene, reinforced polytetrafluoroethylene, and para-polyphenyl.

Furthermore, a clearance between the outer circular surface of the sealing gasket and the smooth inner circular surface of the valve body is 0.05 mm to 0.5 mm.

Furthermore, a clearance between the outer circular surface of the sealing gasket and the smooth inner circular surface of the valve body is 0.1 mm to 0.3 mm.

Furthermore, a bevel angle between the valve seat gland and the sealing gasket is equal to a bevel angle between the left connecting pipe and the sealing gasket, and the internal conical surfaces and the external conical surfaces are completely attached after the valve assembly.

Furthermore, the internally-sealed one-piece external thread ball valve has a nominal diameter of a caliber of 8 mm to 65 mm.

Furthermore, the internally-sealed one-piece external thread ball valve has a nominal diameter of a caliber of 10 mm to 50 mm.

Furthermore, the valve is in flange connection or inclined-plane clamp connection with the pipelines, and the internally-sealed one-piece external thread ball valve has a nominal diameter of a caliber of 50 mm to 200 mm. Furthermore, the valve is in flange connection or inclined-plane clamp connection with the pipelines, and the internally-sealed one-piece external thread ball valve has a nominal diameter of a caliber of 65 mm to 150 mm.

### BRIEF DESCRIPTION OF THE DRAWINGS

FIG. 1 is a sectional diagram of the internally-sealed one-piece external thread ball valve according to an embodiment of the present invention.
FIG. 2 is a structural diagram of the valve seat gland of the internally-sealed one-piece external thread ball valve according to an embodiment of the present invention.
FIG. 3 is a structural diagram of the left connecting pipe of the internally-sealed one-piece external thread ball valve according to an embodiment of the present invention.
FIG. 4 is a structural diagram of the left sealing gasket of the internally-sealed one-piece external thread ball valve according to an embodiment of the present invention.

### Description of parts is as follows:

1 is left connecting pipe; 2 is left nut; 3 is left sealing gasket; 4 is valve seat gland; 5 is valve seat; 6 is valve stem; 7 is ball core; 8 is valve body; 9 is right nut; 10 is right sealing gasket; 11 is right connecting pipe; 13 is pipeline; 14 is through hole; 15 is connecting pipe; 16 is sealing gasket; 17 is nut.

### DETAILED DESCRIPTION

The following examples are intended to illustrate the present invention, but are not intended to limit the scope of the present invention.

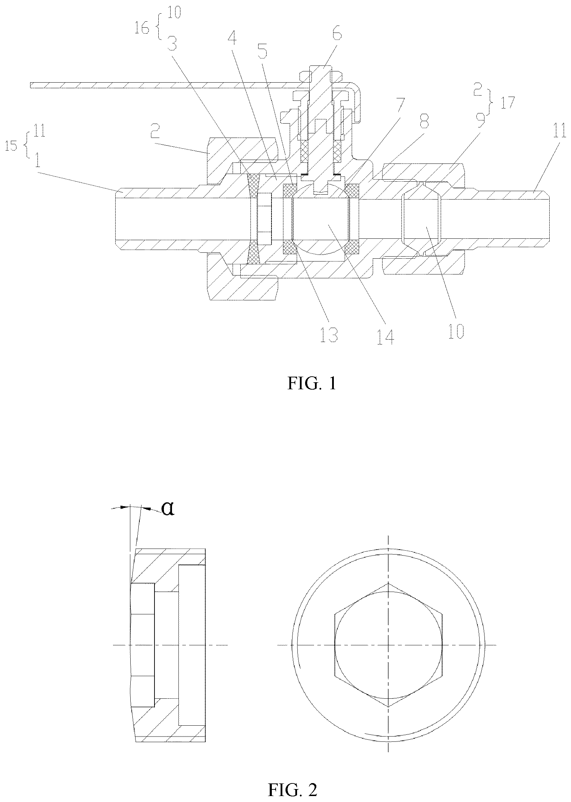

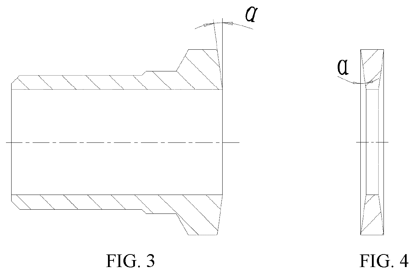

Referring to FIGs. 1-4, the present invention provides an internally-sealed one-piece external thread ball valve, in which the ball core 7 is connected with the pipelines 13 by welding type loose joints without reducing the diameter. The valve seat gland 4 and the sealing gaskets 16 thereout enter the valve body 8, and the sealing gasket 16 is an inverted trapezoidal ring; the specific structure is described as follows.

Provided is an internally-sealed one-piece external thread ball valve, comprising a valve seat gland 4, sealing gaskets 16, a valve, nuts 17 and a valve body 8, wherein the sealing gaskets 16 are arranged in the valve body 8, a contact part of the valve body 8 and the valve seat gland 4 is an internal thread, contact parts of the valve body 8 and the sealing gaskets 16 are smooth inner circular surfaces, the sealing gasket 16 is an inverted trapezoidal ring, the sealing gaskets 16 expand outwards under an action of pressure formed by tightening the nuts 17 during valve assembly, and outer circular surfaces of the sealing gaskets 16 and an inner circular surface of the valve body 8 form sealing.

In some embodiments, the internally-sealed one-piece external thread ball valve further comprises pipelines 13, connecting pipes 15 and a ball core 7, wherein the valve is in movable connection with the pipelines 13, outer walls of two ends of the valve body 8 are threads, loose joint parts connected with the two ends of the valve body 8 comprise the sealing gaskets 16, the connecting pipes 15 and the nuts 17, the sealing gasket 16 is made of a non-rubber plastic material, a through hole 14 is formed in the ball core 7, and a diameter of the through hole 14 is equal to an inner diameter of the pipelines 13. Specifically, the connecting pipes 15 comprise a left connecting pipe 1 and a right connecting pipe 11, wherein the left connecting pipe 1 enters one side of the ball core 7 from the valve body 8, and the right connecting pipe 11 is positioned on the right side of the valve body 8. The nuts 17 comprise a left nut 2 and a right nut 9, wherein the left nut 2 is positioned on the left connecting pipe 1, and the right nut 9 is positioned on the right connecting pipe 11. The sealing gaskets 16 comprise a left sealing gasket 3 and a right sealing gasket 10, wherein the left sealing gasket 3 is positioned between the valve seat gland 4 and the left connecting pipe 1, and the right sealing gasket 10 is positioned between the valve body 8 and the right connecting pipe 11. The contact surfaces of the valve seat gland 4 and the connecting pipes 15 with the sealing gaskets between the valve seat gland 4 and the connecting pipes 15 are all external conical surfaces, and an included angle between a radial cross section of each of the valve seat gland 4 and the connecting pipes 15 and the corresponding external conical surface is 5-30°, and preferably 5-15°. The front and back surfaces of the left sealing gasket 3 between the valve and the left connecting pipe 1 are both internal conical shapes with its cross section being in an inverted trapezoidal shape, with a thin inner part and a thick outer part, and the included angle (bevel angle) α between a radial cross section of each of the valve seat gland 4 and the connecting pipes 15 and the corresponding internal conical surface is 5-30°, and preferably 5-15°. The left sealing gasket 3 is made of a plastic filler such as polytetrafluoroethylene (PTFE), carbon fiber reinforced polytetrafluoroethylene (CFRP), or para-polyphenyl (PPL). The pore size of the sealing gaskets 16 is equal to the diameter of the ball core 7, with the diameter of the ball core 7 being not reduced, a through hole 14 is formed in the ball core, and the diameter of the through hole 14 is equal to the inner diameter of the pipelines 13.

The valve seat gland 4 is arranged in the valve body 8, the inside of the valve seat gland 4 is in contact with the valve seat 5, and the outside of the valve seat gland 4 is in contact with the left sealing gasket 3. The contact surface of the valve seat gland 4 and the left sealing gasket 3 is an external conical surface, and the included angle (bevel angle) α between a radial cross section of the valve seat gland 4 and the external conical surface is 5-30°, and preferably 5-15°. The hole of the valve seat gland 4 is an inner hexagon, an inner octagon or an inner decagon.

Referring to FIG. 6, the sealing surface of the flange of the left connecting pipe 1 is an external conical shape, and the included angle (bevel angle) α between the radial cross section of the left connecting pipe 1 and the external conical surface is 5-30°, and preferably 5-15°. The bevel angle between the valve seat gland 4 and the left sealing gasket 3 is equal to the bevel angle between the flange of the left connecting pipe 1 and the left sealing gasket 3, and the internal conical surfaces and the external conical surfaces are completely attached after the valve assembly.

One half of the inside of the left side (close to the ball core during mounting) of the valve body 8 is a smooth inner circular surface (close to the outside), and the other half thereof is an internal thread (close to the inside). The clearance (difference in radius) between the left sealing gasket 3 and the valve body 8 is 0.05 mm to 0.5 mm, and preferably 0.1 mm to 0.3 mm.

During the valve assembly, after the valve seat gland 4 is mounted, the left sealing gasket 3 and the left connecting pipe 1 are sequentially placed into the valve body 8, and then the left nut 2 is mounted. Tightening the left nut 2 will make the left connecting pipe 1 move inwards, and the left sealing gasket 3, due to its special structure of an inverted trapezoidal shape, expands outwards after being extruded, and is close to the smooth inner circular surface of the valve body 8, and when the nuts 17 are tightened, the outer circular surface of the left sealing gasket 3 is attached to the smooth inner circular surface of the valve body 8, forming sealing. At the moment, the valve seat gland 4, the left sealing gasket 3 and the left connecting pipe 1 are also attached together to form sealing. When in use, under the action of the internal pressure, the left sealing gasket 3 expands outwards, making the sealing strengthened.

In some embodiments, the internally-sealed one-piece external thread ball valve has a nominal diameter of a caliber of 8 mm to 65 mm, and preferably 10 mm to 50 mm.

In another embodiment, the valve is in flange connection or inclined-plane clamp connection with the pipelines 13, and the internally-sealed one-piece external thread ball valve has a nominal diameter of a caliber of 50 mm to 200 mm.

The internally-sealed one-piece external thread ball valve according to one embodiment has the advantages of easiness in machining, low manufacturing cost, reliability in sealing and high pressure resistance. In the present invention, the valve body 8 and the valve seat gland 4 can be respectively manufactured according to the normal valve production procedure, with simplified production process and reduced cost, and in addition, the universality of parts of the valve is good.

In some embodiments, the internally-sealed one-piece external thread ball valve has a lower manufacturing cost than the externally-sealed ball valve.

Specifically, firstly, the sealing gaskets 16 are small in size, so that the using amount of sealing materials is small; secondly, the thickness of the valve body 8 can be thinned, for low-pressure external thread ball valve, on the basis of meeting the standard thickness of the valve body, the thickness of the externally-sealed external thread valve needs to be increased in order to ensure sealing surfaces with enough size (on the valve body, the width is 3-4 mm), and however, the internally-sealed one-piece external thread ball valve in this embodiment does not need to do the same; and thirdly, the machining process is simplified during manufacturing, so that the procedures are less. When the externally-sealed external thread ball valve is subjected to a very high pressure, the trapezoidal sealing gaskets may be deformed and then extruded into the threads of the nuts, so that the sealing gaskets cannot reuse, while the internally-sealed one-piece external thread ball valve in this embodiment does not have this problem.

The test result shows that the sealing material adopts carbon fiber reinforced polytetrafluoroethylene with certain elasticity, the usable fit tolerance of the sealing gasket 3 and the valve body 8 is 0.2-0.8 mm (difference in diameter), the loose joints are disassembled after pressure test, clearances are formed between the sealing gaskets 16 and the valve body 8, the sealing gaskets 16 are easy to take out, and the sealing gaskets 16 can be used repeatedly.

The right side of the valve is connected with the pipelines 13 by using welding type loose joints, and the right sealing gasket 10 is a metal triangular ring or a metal bow-shaped ring, and other sealing gaskets may also be adopted.

The valves currently used in industry have a nominal diameter of a minimum caliber of 15 mm, which is mainly due to the fact that the pipeline is unmatched with the flange of a large size. After the loose joints are popularized in industry, the valve having a nominal diameter of 10 may also be popularized, and therefore, the internally-sealed one-piece external thread ball valve is designed to have a nominal diameter of a caliber of 10 mm to 50 mm. In the prior art, a method for changing the diameter of the valve stem is adopted, the height of a packing box of a screw thread type ball valve is doubled, the packing box is designed according to the standard of a petrochemical ball valve, and a gland is provided with a pressure ring, so that the defect that the packing box of the screw thread type ball valve is not in accordance with chemical and petrochemical requirements is overcome; however, the improvement is designed for a two-piece external thread ball valve, and the valve stem 6 of the internally-sealed one-piece external thread ball valve is more difficult to mount. During design, the problem cannot be overcome by using the internally-sealed one-piece external thread ball valve having a nominal diameter of a caliber of 20 or below and adopting the method for changing the diameter of the valve stem 6, namely, when a packing box is designed according to the standard of petrochemical and industrial ball valves, the valve stem 6 is too long to mount. In order to solve the problem, the valve stem 6 of the ball valves DN20, DN15 and DN10 in this embodiment is designed into two sections, with the two sections being in keyway connection with each other.

The internally-sealed one-piece external thread ball valve in this embodiment may also be used for manufacturing a large-caliber one-piece ball valve. Most of the large-caliber ball valves commercially available in the market at present are two-piece type, and one-piece type is rare. In recent years, an Italian one-piece ball valve appears in the Chinese market, with a nominal diameter of a caliber being 65 mm to 150 mm and the weight being much lighter than a two-piece ball valve, which is popular with chemical plants. If the large-caliber one-piece ball valve is the internally-sealed one-piece external thread ball valve in this embodiment, the manufacture is easier than the sealing of the existing asbestos plate (or stainless steel-graphite wound) flat gasket, and the weight of the valve is lightened. If the inclined-plane clamp connection with the pipelines proposed by the inventor is adopted (CN 106439313 B), compared with the existing two-piece flange ball valve, the weight will be reduced by 50-70%, and the price will be reduced by more than half.

In some embodiments, the internally-sealed one-piece external thread ball valve can be used for low-pressure, medium-pressure and high-pressure inflammable and explosive media. The internally-sealed one-piece external thread ball valve can replace a small-caliber flange ball valve in the chemical industry, with the manufacturing cost of the valve being reduced by 70-80% and the price being reduced by times, so that the internally-sealed one-piece external thread ball valve has great significance in popularization in the chemical industry. Compared with a flange ball valve, the internally-sealed one-piece external thread ball valve is convenient to mount, so that the mounting cost of chemical manufacturing is saved, and the steel is saved, with the steel for valve manufacturing being reduced by 70-80%, which contributes greatly to environmental protection, energy conservation and emission reduction. The internally-sealed one-piece external thread ball valve can be applied in the industries of general chemical industry, petroleum, petrochemical industry, power generation, steel making and the like, and used for process pipelines of heavy industry.

In some embodiments, the sealing material of the internally-sealed one-piece external thread ball valve is carbon fiber reinforced polytetrafluoroethylene, with the bevel angle α = 7.5°. A common integral valve stem has a diameter of 9 mm with threads M8 at the upper end. The sealing gasket in movable connection with the right side (connected with the loose joint side) of the valve is a metal bow-shaped ring, with the specification of the nuts of M42 × 2. The length of the valve body is 75 mm, and the total length of the valve with loose joints mounted at two ends thereof is 183 mm, and the weight of the valve is 1.7 kg. The left side (close to the ball core) of the valve body 8 has an specification of external threads of M52 × 2 and an specification of internal threads of M44 × 2, and an inner diameter of the smooth surface of 44 mm. Three types of sealing gaskets 16 are made, the outer diameters thereof are 43.2 mm, 43.5 mm and 43.8 mm respectively, and the clearances between the sealing gaskets 16 and the valve body 8 are 0.4 mm, 0.25 mm and 0.1 mm respectively. After the valve assembly, the valve is tested on a special pressure testing machine for a loose-joint ball valve; the valve is immersed in water, the air pressure is 0.8 MPa, and no bubbles are generated. The valve is taken out from the pressure testing machine and disassembled for observation, wherein there are clearances between the sealing gaskets 16 and the valve body 8, which proves that the sealing gaskets have certain elasticity and can be used repeatedly.

For a stainless steel DN25PN16 flange ball valve in the prior art, flanges are mounted at two ends thereof, bolts are mounted, and the weight is 6.97 kg. The weight of the flange ball valve is 4.1 times of that of the loose-joint ball valve.

In some embodiments, the sealing gasket of the internally-sealed one-piece external thread ball valve is made of carbon fiber reinforced polytetrafluoroethylene. The valve stem 6 is of an upper-lower segmented structure, the diameter of the valve stem 6 is 9 mm, and the upper-segmented structure is provided with threads M8 at the upper end. The sealing gasket in movable connection with the right side of the valve is a metal bow-shaped ring, with the specification of the nuts of M28 × 2. The length of the valve body 8 is 40 mm, and the total length of the valve with loose joints mounted at two ends thereof is 154 mm, and the weight of the valve is 1.0 kg. The specification of external threads on the left side of the valve body 8 is M42 × 2 and the specification of internal threads thereon is M32 × 2, and the inner diameter of the smooth surface is 32 mm. The outer diameter of the sealing gaskets 16 is 31.5 mm, and the clearance between each sealing gasket 16 and the valve body 8 is 0.25 mm. After the valve assembly, the valve is tested on a special pressure testing machine for a loose-joint ball valve; the valve is immersed in water, the air pressure is 0.8 MPa, and no bubbles are generated. The valve is taken out from the pressure testing machine and disassembled for observation, wherein there are clearances between the sealing gaskets 16 and the valve body 8, and thus the sealing gaskets can be used repeatedly.

For a stainless steel DN15PN16 flange ball valve in the prior art, flanges are mounted at two ends thereof, bolts are mounted, and the weight is 4.38 kg. The weight of the flange ball valve is 4.3 times of that of the loose-joint ball valve.

The above description is only a preferred embodiment of the present invention, and is not intended to limit the scope of the present inventior as defined by the appended claims.

## Claims

1. An internally-sealed one-piece external thread ball valve, comprising connecting pipes (1, 11), nuts (2, 9), a left sealing gasket (3), a valve seat gland (4), a ball core (7), and a valve body (8), wherein the left sealing gasket (3) is arranged in the valve body (8), a contact part of the valve body (8) and the valve seat gland (4) is an internal thread, a contact part of the valve body (8) and the left sealing gasket (3) is a smooth inner circular surface, **characterized in that** the left sealing gasket (3) is an inverted trapezoidal ring with a thick outer part and a thin inner part, the left sealing gasket (3) expands outwards under an action of pressure formed by tightening the nut (2, 9) during valve assembly, and an outer circular surface of the left sealing gasket (3) and an inner circular surface of the valve body (8) form sealing.

2. The internally-sealed one-piece external thread ball valve according to claim 1, **characterized by** further comprising the connecting pipes (1, 11) and the ball core (7), wherein the valve body (8) is in movable connection with the connecting pipes (1, 11), outer walls of two ends of the valve body (8) are threads, loose joint parts connected with the two ends of the valve body (8) comprise the connecting pipes (1, 11), the nuts (2, 9) and the sealing gasket (3, 10), the left sealing gasket (3) is made of a non-rubber plastic material, a through hole (14) is formed in the ball core (7), and a diameter of the through hole (14) is equal to an inner diameter of the connecting pipes (1, 11).

3. The internally-sealed one-piece external thread ball valve according to claim 2, **characterized in that** contact surfaces of the valve seat gland (4) and the connecting pipes (1, 11) with the left sealing gaskets (3) between the valve seat gland (4) and the connecting pipes (1, 11) are all external conical surfaces, and an included angle between a radial cross section of each of the valve seat gland (4) and the connecting pipes (1, 11) and the corresponding external conical surface is 5-30°.

4. The internally-sealed one-piece external thread ball valve according to claim 3, **characterized in that** the included angle between the radial cross section of each of the valve seat gland (4) and the connecting pipes (1, 11) and the corresponding external conical surface is 5-15°.

5. The internally-sealed one-piece external thread ball valve according to claim 2, **characterized in that** the left sealing gasket (3) is made of a plastic material, an inner hole of the left sealing gasket (3) is equal to the diameter of the through hole (14), front and back radial surfaces of the left sealing gasket (3) are both internal conical shapes, and an included angle between a radial cross section of the left sealing gasket (3) and each internal conical surface is 5-30°.

6. The internally-sealed one-piece external thread ball valve according to claim 5, **characterized in that** the included angle between the radial cross section of the left sealing gasket (3) and each internal conical surface is 5-15°.

7. The internally-sealed one-piece external thread ball valve according to claim 5, **characterized in that** the plastic material is any one of polytetrafluoroethylene, reinforced polytetrafluoroethylene, and para-polyphenyl.

8. The internally-sealed one-piece external thread ball valve according to claim 1, **characterized in that** a clearance between the outer circular surface of the left sealing gasket (3) and the smooth inner circular surface of the valve body (8) is 0.05 mm to 0.5 mm.

9. The internally-sealed one-piece external thread ball valve according to claim 1, **characterized in that** a clearance between the outer circular surface of the left sealing gasket (3) and the smooth inner circular surface of the valve body (8) is 0.1 mm to 0.3 mm.

10. The internally-sealed one-piece external thread ball valve according to claim 5, **characterized in that** a bevel angle between the valve seat gland (4) and the left sealing gasket (3) is equal to a bevel angle between the connecting pipe (1, 11) and the left sealing gasket (3), and the internal conical surfaces and the external conical surfaces are completely attached after the ball valve assembly.

11. The internally-sealed one-piece external thread ball valve according to claim 1, **characterized by** having a nominal diameter of a caliber of 8 mm to 65 mm.

12. The internally-sealed one-piece external thread ball valve according to claim 1, **characterized by** having a nominal diameter of a caliber of 10 mm to 50 mm.

13. The internally-sealed one-piece external thread ball valve according to claim 2, **characterized in that** the valve is in flange connection or inclined-plane clamp connection with pipelines (13), and the internally-sealed one-piece external thread ball valve has a nominal diameter of a caliber of 50 mm to 200 mm.

14. The internally-sealed one-piece external thread ball valve according to claim 2, **characterized in that** the valve is in flange connection or inclined-plane clamp connection with pipelines (13), and the internally-sealed one-piece external thread ball valve has a nominal diameter of a caliber of 65 mm to 150 mm.

## Patentansprüche

1. Einteiliger innen abgedichteter Kugelhahn mit Außengewinde, umfassend Verbindungsrohre (1, 11), Muttern (2, 9), eine linke Dichtung (3), ein Ventilsitzdruckstück (4), einen Kugelkörper (7) und ein Ventilgehäuse (8), wobei die linke Dichtung (3) in dem Ventilgehäuse (8) angeordnet ist, ein Kontaktbereich des Ventilgehäuses (8) mit dem Ventilsitzdruckstück (4) als Innengewinde ausgebildet ist und ein Kontaktbereich des Ventilgehäuses (8) mit der linken Dichtung (3) als glatte innere Umfangsfläche ausgebildet ist,
**dadurch gekennzeichnet, dass** die linke Dichtung (3) ein umgekehrt trapezförmiger Ring mit einem dicken äußeren Teil und einem dünnen inneren Teil ist, wobei sich die linke Dichtung (3) unter der Wirkung eines Drucks, der durch Anziehen der Mutter (2, 9) während der Ventilmontage erzeugt wird, nach außen ausdehnt und eine äußere Umfangsfläche der linken Dichtung (3) und wobei eine innere Umfangsfläche des Ventilgehäuses (8) eine Abdichtung bilden.

2. Einteiliger innen abgedichteter Kugelhahn mit Außengewinde nach Anspruch 1, **dadurch gekennzeichnet, dass** er ferner die Verbindungsrohre (1, 11) und den Kugelkörper (7) umfasst, wobei das Ventilgehäuse (8) beweglich mit den Verbindungsrohren (1, 11) verbunden ist, die Außenwände zweier Enden des Ventilgehäuses (8) Gewinde aufweisen, mit den beiden Enden des Ventilgehäuses (8) verbundene Teile lösbarer Rohrverbindungen die Verbindungsrohre (1, 11), die Muttern (2, 9) und die Dichtung (3, 10) umfassen, die linke Dichtung (3) aus einem Kunststoffmaterial besteht, wobei es sich nicht um Gummi handelt, eine Durchgangsöffnung (14) in dem Kugelkörper (7) ausgebildet ist und ein Durchmesser der Durchgangsöffnung (14) gleich einem Innendurchmesser der Verbindungsrohre (1, 11) ist.

3. Einteiliger innen abgedichteter Kugelhahn mit Außengewinde nach Anspruch 2, **dadurch gekennzeichnet, dass** die Kontaktflächen des Ventilsitzdruckstücks (4) und der Verbindungsrohre (1, 11) mit den zwischen dem Ventilsitzdruckstück (4) und den Verbindungsrohren (1, 11) liegenden linken Dichtungen (3) sämtlich Außenkonusflächen sind und der radiale Querschnitt des Ventilsitzdruckstücks (4) und die radialen Querschnitte der Verbindungsrohre (1, 11) jeweils mit der entsprechenden Außenkonusfläche einen Winkel von 5 bis 30° einschließen.

4. Einteiliger innen abgedichteter Kugelhahn mit Außengewinde nach Anspruch 3, **dadurch gekennzeichnet, dass** der radiale Querschnitt des Ventilsitzdruckstücks (4) und die radialen Querschnitte der Verbindungsrohre (1, 11) jeweils mit der entsprechenden Außenkonusfläche einen Winkel von 5 bis 15° einschließen.

5. Einteiliger innen abgedichteter Kugelhahn mit Außengewinde nach Anspruch 2, **dadurch gekennzeichnet, dass** die linke Dichtung (3) aus einem Kunststoffmaterial besteht, der Durchmesser einer Innenöffnung der linken Dichtung (3) gleich dem Durchmesser der Durchgangsöffnung (14) ist, die vordere und die hintere radiale Fläche der linken Dichtung (3) beide als Innenkonusflächen ausgebildet sind und ein radialer Querschnitt der linken Dichtung (3) mit jeder Innenkonusfläche einen Winkel von 5 bis 30° einschließt.

6. Einteiliger innen abgedichteter Kugelhahn mit Außengewinde nach Anspruch 5, **dadurch gekennzeichnet, dass** der Winkel zwischen dem radialen Querschnitt der linken Dichtung (3) und jeder Innenkonusfläche dieser Dichtung 5-15° beträgt.

7. Einteiliger innen abgedichteter Kugelhahn mit Außengewinde nach Anspruch 5, **dadurch gekennzeichnet, dass** das Kunststoffmaterial eines der Materialien Polytetrafluorethylen, verstärktes Polytetrafluorethylen oder para-Polyphenylen ist.

8. Einteiliger innen abgedichteter Kugelhahn mit Außengewinde nach Anspruch 1, **dadurch gekennzeichnet, dass** ein Spiel zwischen der äußeren Umfangsfläche der linken Dichtung (3) und der glatten inneren Umfangsfläche des Ventilgehäuses (8) 0,05 mm bis 0,5 mm beträgt.

9. Einteiliger innen abgedichteter Kugelhahn mit Außengewinde nach Anspruch 1, **dadurch gekennzeichnet, dass** ein Spiel zwischen der äußeren Umfangsfläche der linken Dichtung (3) und der glatten inneren Umfangsfläche des Ventilgehäuses (8) 0,1 mm bis 0,3 mm beträgt.

10. Einteiliger innen abgedichteter Kugelhahn mit Außengewinde nach Anspruch 5, **dadurch gekennzeichnet, dass** ein Neigungswinkel zwischen dem Ventilsitzdruckstück (4) und der linken Dichtung (3) gleich einem Neigungswinkel zwischen dem Verbindungsrohr (1, 11) und der linken Dichtung (3) ist und die Innenkonusflächen und die Außenkonusflächen nach der Montage des Kugelhahns vollständig aneinander anliegen.

11. Einteiliger innen abgedichteter Kugelhahn mit Außengewinde nach Anspruch 1, **dadurch gekennzeichnet, dass** er eine Nennweite von 8 mm bis 65 mm aufweist.

12. Einteiliger innen abgedichteter Kugelhahn mit Außengewinde nach Anspruch 1, **dadurch gekennzeichnet, dass** er eine Nennweite von 10 mm bis 50 mm aufweist.

13. Einteiliger innen abgedichteter Kugelhahn mit Außengewinde nach Anspruch 2, **dadurch gekennzeichnet, dass** der Kugelhahn mit Rohrleitungen (13) über eine Flanschverbindung oder eine Klemmverbindung mit Schrägflächen verbunden ist und der einteilige innen abgedichtete Kugelhahn mit Außengewinde eine Nennweite von 50 mm bis 200 mm aufweist.

14. Einteiliger innen abgedichteter Kugelhahn mit Außengewinde nach Anspruch 2, **dadurch gekennzeichnet, dass** der Kugelhahn mit Rohrleitungen (13) über eine Flanschverbindung oder eine Klemmverbindung mit Schrägflächen verbunden ist und der einteilige innen abgedichtete Kugelhahn mit Außengewinde eine Nennweite von 65 mm bis 150 mm aufweist.

## Revendications

1. Robinet à tournant sphérique monobloc à filetage extérieur et à étanchéité interne, comprenant des tuyaux de raccordement (1, 11), des écrous (2, 9), un joint d'étanchéité gauche (3), un presse-garniture de siège de robinet (4), une bille (7) et un corps de robinet (8), dans lequel le joint d'étanchéité gauche (3) est disposé dans le corps de robinet (8), une partie de contact du corps de robinet (8) et du presse-garniture de siège de robinet (4) est un filetage interne, une partie de contact du corps de robinet (8) et du joint d'étanchéité gauche (3) est une surface circulaire interne lisse,
**caractérisé en ce que** le joint d'étanchéité gauche (3) est une bague trapézoïdale inversée ayant une partie extérieure épaisse et une partie intérieure mince, le joint d'étanchéité gauche (3) s'expanse vers l'extérieur sous l'action d'une pression formée par le serrage de l'écrou (2, 9) lors de l'assemblage du robinet, et une surface circulaire externe du joint d'étanchéité gauche (3) et une surface circulaire interne du corps de robinet (8) forment une étanchéité.

2. Robinet à tournant sphérique monobloc à filetage extérieur et à étanchéité interne selon la revendication 1, **caractérisé en ce qu'**il comprend en outre les tuyaux de raccordement (1, 11) et la bille (7), dans lequel le corps de robinet (8) est en liaison mobile avec les tuyaux de raccordement (1, 11), des parois extérieures de deux extrémités du corps de robinet (8) sont des filetages, des parties de raccord démontable reliées aux deux extrémités du corps de robinet (8) comprennent les tuyaux de raccordement (1, 11), les écrous (2, 9) et le joint d'étanchéité (3, 10), le joint d'étanchéité gauche (3) est réalisé en un matériau plastique non-caoutchouc, un trou traversant (14) est formé dans la bille (7), et un diamètre du trou traversant (14) est égal à un diamètre intérieur des tuyaux de raccordement (1, 11).

3. Robinet à tournant sphérique monobloc à filetage extérieur et à étanchéité interne selon la revendication 2, **caractérisé en ce que** des surfaces de contact du presse-garniture de siège de robinet (4) et des tuyaux de raccordement (1, 11) avec les joints d'étanchéité gauches (3) entre le presse-garniture de siège de robinet (4) et les tuyaux de raccordement (1, 11) sont toutes des surfaces coniques externes, et un angle inclus entre une section transversale radiale de chacun parmi le presse-garniture de siège de robinet (4) et les tuyaux de raccordement (1, 11) et la surface conique externe correspondante est de 5 à 30°.

4. Robinet à tournant sphérique monobloc à filetage extérieur et à étanchéité interne selon la revendication 3, **caractérisé en ce que** l'angle inclus entre la section transversale radiale de chacun parmi le presse-garniture de siège de robinet (4) et les tuyaux de raccordement (1, 11) et la surface conique externe correspondante est de 5 à 15°.

5. Robinet à tournant sphérique monobloc à filetage extérieur et à étanchéité interne selon la revendication 2, **caractérisé en ce que** le joint d'étanchéité gauche (3) est réalisé en un matériau plastique, un trou intérieur du joint d'étanchéité gauche (3) est égal au diamètre du trou traversant (14), des surfaces radiales avant et arrière du joint d'étanchéité gauche (3) sont toutes deux de forme conique interne, et un angle inclus entre une section transversale radiale du joint d'étanchéité gauche (3) et chaque surface conique interne est de 5 à 30°.

6. Robinet à tournant sphérique monobloc à filetage extérieur et à étanchéité interne selon la revendication 5, **caractérisé en ce que** l'angle inclus entre la section transversale radiale du joint d'étanchéité gauche (3) et chaque surface conique interne est de 5 à 15°.

7. Robinet à tournant sphérique monobloc à filetage extérieur et à étanchéité interne selon la revendication 5, **caractérisé en ce que** le matériau plastique est l'un quelconque parmi le polytétrafluoroéthylène, le polytétrafluoroéthylène renforcé et le poly-para-phénylène.

8. Robinet à tournant sphérique monobloc à filetage extérieur et à étanchéité interne selon la revendication 1, **caractérisé en ce qu'**un jeu entre la surface circulaire externe du joint d'étanchéité gauche (3) et la surface circulaire interne lisse du corps de robinet (8) est de 0,05 mm à 0,5 mm.

9. Robinet à tournant sphérique monobloc à filetage extérieur et à étanchéité interne selon la revendication 1, **caractérisé en ce qu'**un jeu entre la surface circulaire externe du joint d'étanchéité gauche (3) et la surface circulaire interne lisse du corps de robinet (8) est de 0,1 mm à 0,3 mm.

10. Robinet à tournant sphérique monobloc à filetage extérieur et à étanchéité interne selon la revendication 5, **caractérisé en ce qu'**un angle de biseau entre le presse-garniture de siège de robinet (4) et le joint d'étanchéité gauche (3) est égal à un angle de biseau entre le tuyau de raccordement (1, 11) et le joint d'étanchéité gauche (3), et les surfaces coniques internes et les surfaces coniques externes sont complètement plaquées après l'assemblage du robinet à tournant sphérique.

11. Robinet à tournant sphérique monobloc à filetage extérieur et à étanchéité interne selon la revendication 1, **caractérisé en ce qu'**il présente un diamètre nominal de calibre de 8 mm à 65 mm.

12. Robinet à tournant sphérique monobloc à filetage extérieur et à étanchéité interne selon la revendication 1, **caractérisé en ce qu'**il présente un diamètre nominal de calibre de 10 mm à 50 mm.

13. Robinet à tournant sphérique monobloc à filetage extérieur et à étanchéité interne selon la revendication 2, **caractérisé en ce que** le robinet est en raccordement par bride ou en raccordement par collier à plan incliné avec des conduites (13), et le robinet à tournant sphérique monobloc à filetage extérieur et à étanchéité interne présente un diamètre nominal de calibre de 50 mm à 200 mm.

14. Robinet à tournant sphérique monobloc à filetage extérieur et à étanchéité interne selon la revendication 2, **caractérisé en ce que** le robinet est en raccordement par bride ou en raccordement par collier à plan incliné avec des conduites (13), et le robinet à tournant sphérique monobloc à filetage extérieur et à étanchéité interne présente un diamètre nominal de calibre de 65 mm à 150 mm.
